# EUROPÄISCHE PATENTSCHRIFT

(11) **EP 3 939 478 B1**
(45) Veröffentlichungstag und Bekanntmachung des Hinweises auf die Patenterteilung: **07.06.2023**
(21) Anmeldenummer: 21163530.5
(22) Anmeldetag: 18.03.2021
(51) Int. Cl.: A47F 3/12

(54) **KANTENPROFIL UND BEHÄLTNIS MIT EINEM SOLCHEN KANTENPROFIL**
EDGE PROFILE AND CONTAINER WITH SUCH AN EDGE PROFILE
PROFIL DE BORD ET RÉCIPIENT DOTÉ D'UN TEL PROFIL DE BORD

(30) Priorität: 20.03.2020 DE 102020107723
(43) Veröffentlichungstag der Anmeldung: 19.01.2022
(73) Patentinhaber: Schreiber, Bernd, 09468 Geyer (DE)
(72) Erfinder: Schreiber, Bernd, 09468 Geyer (DE)
(74) Vertreter: Steiniger, Carmen

(56) Entgegenhaltungen:
- EP-A1- 2 327 337
- DE-A1- 2 730 905
- US-A- 5 549 372

## Beschreibung

Die vorliegende Erfindung betrifft ein Kantenprofil zur Verbindung von zwei platten- oder scheibenförmigen, rahmenlosen Seitenelementen eines Behältnisses, die jeweils wenigstens an ihrem dem Kantenprofil zugewandten Ende eine Gehrung aufweisen, wobei jeweils eine Innenseite der Seitenelemente mit der Gehrung einen spitzen Winkel ausbildet, oder eine Spitze aufweisen, wobei jeweils eine Innenseite des jeweiligen Seitenelementes mit der jeweils daran anliegenden Seite der Spitze einen stumpfen Winkel bildet. Die Erfindung betrifft ferner ein Behältnis mit einem solchen Kantenprofil.

In einer aus der Druckschrift DE 10 2017 125 547 B3 bekannten Vitrine weisen die darin verwendeten rahmenlosen Scheiben an ihren Enden Gehrungen auf, die miteinander durch Klebung verbunden werden. Dies führt zwar zu einem sehr ansprechenden Äußeren der bekannten Vitrine, hat jedoch den Nachteil, dass beispielsweise in den Seitenecken der Vitrine verlaufende, zur Beleuchtung der Vitrine genutzte Elektrokabel trotzdem von außen sichtbar sind. Ferner kann die Klebeverbindung aufgeschnitten werden, sodass sich eine unbefugte Person Zugriff zum Inneren der Vitrine verschaffen kann. Ein weiteres gattungsgemäßes Kantenprofil ist bspw. aus der EP 2 327 337 A1 bekannt.

Ferner existieren im Stand der Technik Vitrinen mit rahmenlosen Scheiben, die an ihren Seitenkanten Kantenprofile der eingangs angegebenen Gattung nutzen. Diese Kantenprofile sind jedoch von außen sichtbar. Außerdem müssen die verwendeten Kantenprofilleisten umständlich von oben auf seitlichen Scheibenkanten aufgeschoben werden, wozu es erforderlich ist, dass nach oben genügend Platz zur Verfügung steht.

Es ist daher die Aufgabe der vorliegenden Erfindung, eine Verbindungsmöglichkeit für platten- oder scheibenförmige, rahmenlose Seitenelemente eines Behältnisses zur Verfügung zu stellen, die sicher ist, das Behältnis nicht optisch beeinträchtigt und dennoch einfach installierbar ist. Ferner soll ein entsprechend ausgebildetes Behältnis bereitgestellt werden.

Es gibt ein Kantenprofil zur Verbindung von zwei platten- oder scheibenförmigen, rahmenlosen Seitenelementen eines Behältnisses, die jeweils wenigstens an ihren dem Kantenprofil zugewandten Enden eine Gehrung aufweisen, wobei jeweils eine Innenseite der Seitenelemente mit der Gehrung einen spitzen Winkel ausbildet, wobei das Kantenprofil wenigstens ein erstes Kantenprofilteil und wenigstens ein dazu spiegelsymmetrisch ausgebildetes zweites Kantenprofilteil aufweist, deren Querschnitt jeweils einen dreieckförmigen Außenabschnitt mit einer Außenabschnittshypotenuse, einer ersten Außenabschnittskathete und einer zweiten Außenabschnittskathete, zwischen welchen ein rechter Winkel ausgebildet ist, und einen mit dem Außenabschnitt einstückig ausgebildeten oder fest verbundenen Innenabschnitt mit einer Innenabschnittshypotenuse und wenigstens einer Innenabschnittskathete aufweist, wobei zwischen der Innenabschnittshypotenuse und der wenigstens einen Innenabschnittskathete ein spitzer Winkel ausgebildet ist; wobei die Außenabschnittshypotenuse und die Innenabschnittshypotenuse parallel zueinander verlaufen und zwischen der zweiten Außenabschnittskathete und der Innenabschnittshypotenuse eine winklige Aufnahme ausgebildet ist; jedes der Kantenprofilteile einen parallel zu der jeweiligen ersten Außenabschnittskathete verlaufenden Einschnitt aufweist; und das Kantenprofil eine einen U- oder V-förmigen Querschnitt aufweisende Verbindungs- und/oder Dichtungseinheit mit zwei Verbindungsschenkeln, die in die beiden Einschnitte eingebracht oder einbringbar sind, aufweist.

Die beiden Außenabschnitte bilden von außen sichtbare, optisch ansprechende Ecke des Behältnisses aus. Durch die in die Außenabschnitte eingebrachte oder einbringbare Verbindungs- und/oder Dichtungseinheit werden sowohl die Kantenprofilteile verbunden als auch die Verbindung staubdicht nach außen abgedichtet. Dabei werden die Gehrungen der platten- oder scheibenförmigen, rahmenlosen Seitenelemente, die vorzugsweise rahmenlose Glasscheiben sind, fest und sicher in den jeweils zwischen den Außen- und Innenabschnitten ausgebildeten Aufnahmen gehalten.

Da das Kantenprofil zwei Kantenprofilteile aufweist, kann jedes dieser Kantenprofilteile bei einer Montage des Behältnisses zunächst auf die jeweilige Gehrung des jeweiligen Seitenelementes seitlich aufgesteckt werden und dann einfach mittels der Verbindungs-und/oder Dichtungseinheit miteinander verbunden werden. Ein Aufschieben von oben ist also nicht erforderlich.

Grundsätzlich reicht es bei dem Kantenprofil aus, wenn die Innenabschnitte die jeweils an einer Innenwand des jeweiligen Seitenelementes anliegende Innenabschnittshypotenuse und eine dazu im spitzen Winkel ausgebildete Innenabschnittskathete, die zu der Innenabschnittskathete des gegenüber liegenden Innenabschnittes parallel verläuft oder sogar mit dieser auf einer Linie liegt, aufweisen. Eine weitere Innenabschnittskathete ist also nicht unbedingt notwendig.

Stabiler ist die Anordnung jedoch, wenn jeder der Innenabschnitte eine erste Innenabschnittskathete und eine zweite Innenabschnittskathete aufweist, zwischen welchen ein rechter Winkel ausgebildet ist, wobei die erste Außenabschnittskathete parallel zu der ersten Innenabschnittskathete verläuft.

Die Verbindungs- und/oder Dichtungseinheit kann als eine starre U-, V- oder Doppel-L-förmige Klammer ausgebildet sein, deren Verbindungsschenkel an einer Außenseite der Verbindungs- und/oder Dichtungseinheit direkt oder durch einen festen Überbrückungssteg verbunden sind. Dabei wird zwischen den Seitenelementen des Behältnisses ein stabiler rechter Winkel gehalten.

Die Aufgabe wird durch ein Kantenprofil zur Verbindung von zwei platten- oder scheibenförmigen, rahmenlosen Seitenelementen eines Behältnisses, die jeweils wenigstens an ihren dem Kantenprofil zugewandten Enden eine Spitze aufweisen, wobei jeweils eine Innenseite des jeweiligen Seitenelementes mit der jeweils daran anliegenden Seite der Spitze einen stumpfen Winkel bildet, gelöst, wobei das Kantenprofil wenigstens ein erstes Kantenprofilteil und wenigstens ein dazu spiegelsymmetrisch ausgebildetes zweites Kantenprofilteil aufweist, deren Querschnitt jeweils einen dreieckförmigen Außenabschnitt mit einer Außenabschnittshypotenuse, einer ersten Außenabschnittskathete und einer zweiten Außenabschnittskathete, zwischen welchen ein rechter Winkel ausgebildet ist, und einen mit dem Außenabschnitt einstückig ausgebildeten oder fest verbundenen, in Form eines rechten Winkels ausgebildeten Innenabschnitt aufweist, wobei jeweils erste Innenabschnittskatheten der Innenabschnitte beider Kantenprofilteile fest an einer Seite der Spitze des jeweils angrenzenden Seitenelementes anliegen können und bei geschlossenem Kantenprofil jeweils zweite Innenabschnittskatheten der Innenabschnitte beider Kantenprofilteile auf einer Gerade liegen; jedes der Kantenprofilteile in seinem jeweiligen Außenabschnitt einen parallel zu der jeweiligen zweiten Außenabschnittskathete verlaufenden Einschnitt in die jeweilige erste Außenabschnittskathete aufweist; und das Kantenprofil eine Verbindungs- und/oder Dichtungseinheit mit zwei L-förmigen Verbindungsschenkeln, die in die beiden Einschnitte eingebracht oder einbringbar sind, aufweist, wobei die Kantenprofilteile an äußeren Enden ihrer ersten Außenabschnittskatheten mit einem Gelenk verbunden sind.

Bei einer bevorzugten Ausführungsform der vorliegenden Erfindung sind die Kantenprofilteile an äußeren Enden ihrer ersten Außenabschnittskatheten mit einem Gelenk verbunden. Diese Ausführungsform ermöglicht eine Klappbarkeit wenigstens eines der Seitenelemente des Behältnisses, sodass damit eine Tür des Behältnisses realisiert werden kann. Ist diese Tür geschlossen, so besteht zwischen den Seitenelementen des Behältnisses ein rechter Winkel, beim Öffnen der Tür stellt sich zwischen den Seitenelementen des Behältnisses ein veränderbarer stumpfer Winkel ein.

In einer weiteren vorteilhaften Ausführungsform der Erfindung sind in den Außenabschnitten der Kantenprofilteile beidseitig des Gelenks nach außen offene Kammern ausgebildet. In diese Kammern können Enden einer über das Gelenk gelegten Abdeckung, wie einer Gummidichtung, gesteckt werden. Durch eine solche Abdeckung ist das das Gelenk aufweisende Scharnier von außen abgedeckt, wodurch ein Behältnis mit einem solchen Kantenprofil eine besonders ansprechende Optik von außen aufweist.

Vorzugsweise sind die Außenabschnitte der Kantenprofilteile aus Vollmaterial ausgebildet. Dadurch erreicht man eine hohe mechanische Stabilität.

Besonders von Vorteil ist es, wenn die Innenabschnitte der Kantenprofilteile innen hohl ausgebildet sind und/oder zwischen sich wenigstens einen Hohlraum ausbilden. Dieser wenigstens eine Hohlraum kann dazu genutzt werden, beispielsweise Elektrokabel, beispielsweise zur Beleuchtung des Behältnisses, darin entlang zu führen. Sie können jedoch auch für Verschraubungen von innerhalb des Behältnisses befindlichen Bodenträgern oder Abhängungen dienen.

In einer weiteren vorteilhaften Ausführungsform der vorliegenden Erfindung ist das Kantenprofil aus wenigstens zwei vertikal übereinander angeordneten Kantenprofilstücken ausgebildet. Diese Ausführungsform eignet sich insbesondere dann, wenn die Seitenkanten der Seitenelemente relativ lang sind.

Dabei ist es besonders günstig, wenn wenigstens zwei nebeneinander liegende Innenabschnitte zusammen eine ebene Ablage- oder Montagefläche ausbilden. Diese Ablagefläche kann beispielsweise zur Montage eines Zwischenbodenträgerelementes in einer Ecke eines Behältnisses genutzt werden, wobei auf vier solcher, auf gleicher Höhe montierter Zwischenbodenträgerelemente ein Zwischenboden aufgelegt werden kann. Günstig ist es auch, wenn Ecken der Kantenprofilteile abgeflacht oder abgerundet sind. Dadurch kann eine Verletzungsgefahr an den Ecken verringert werden.

Die Aufgabe wird darüber hinaus durch ein Behältnis mit wenigstens einem erfindungsgemäßen Kantenprofil, mit dem zwei platten- oder scheibenförmige, rahmenlose Seitenelemente des Behältnisses verbunden sind, gelöst. Das Behältnis ist vorzugsweise eine Vitrine.

Bevorzugte Ausführungsformen der vorliegenden Erfindung, deren Aufbau, Funktion und Vorteile werden im Folgenden anhand von Figuren näher erläutert, wobei
- Figur 1: schematisch ein Beispiel eines Kantenprofils zwischen zwei platten- oder scheibenförmigen, rahmenlosen Seitenelementen eines Behältnisses in einer geschnittenen Draufsicht zeigt;
- Figur 2: schematisch ein weiteres Beispiel eines Kantenprofils zwischen zwei platten- oder scheibenförmigen, rahmenlosen Seitenelementen eines Behältnisses in geschlossenem Zustand in einer geschnittenen Draufsicht zeigt;
- Figur 3: schematisch das Kantenprofil aus Figur 2 in einem geöffneten Zustand in einer geschnittenen Draufsicht zeigt;
- Figur 4: schematisch ein weiteres Beispiel eines Kantenprofils zwischen zwei, jeweils an ihrem Ende eine Spitze aufweisenden, platten- oder scheibenförmigen, rahmenlosen Seitenelementen eines Behältnisses in einer geschnittenen Draufsicht zeigt;
- Figur 5: schematisch eine Abwandlung des Beispiels von Figur 4 zeigt;
- Figur 6: schematisch ein weiteres Beispiel eines Kantenprofils zwischen zwei platten- oder scheibenförmigen, rahmenlosen Seitenelementen eines Behältnisses in geschlossenem Zustand in einer geschnittenen Draufsicht zeigt;
- Figur 7: schematisch eine Ausführungsform eines erfindungsgemäßen Kantenprofils zwischen zwei platten- oder scheibenförmigen, rahmenlosen Seitenelementen eines Behältnisses in geschlossenem Zustand in einer geschnittenen Draufsicht zeigt;
- Figur 8: das Kantenprofil von Figur 7 in geöffnetem Zustand in einer geschnittenen Draufsicht zeigt;
- Figur 9: schematisch eine Ausführungsform eines Behältnisses der vorliegenden Erfindung in einer perspektivischen Ansicht zeigt;
- Figur 10: schematisch ein Detail einer Ausführungsform eines Behältnisses der vorliegenden Erfindung in einer Seitenansicht zeigt; und
- Figur 11: schematisch ein anderes Detail einer Ausführungsform eines Behältnisses der vorliegenden Erfindung in einer perspektivischen Sicht in eine Ecke des Behältnisses zeigt.

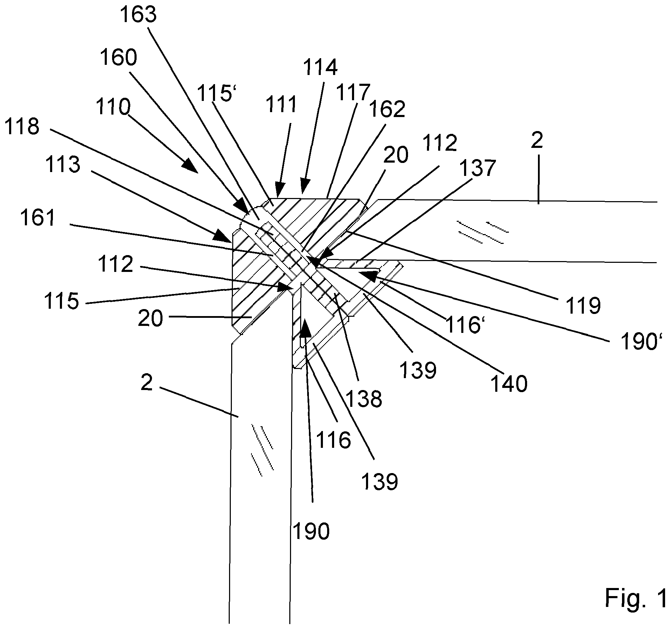

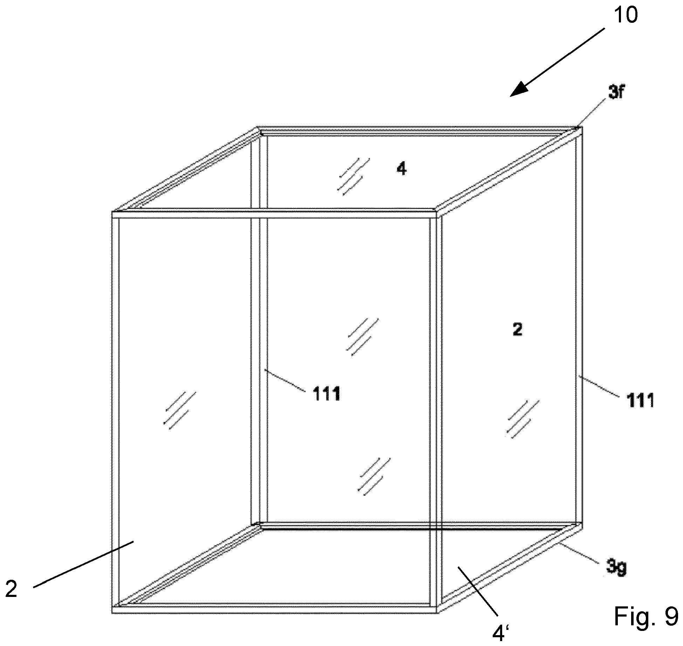

Figur 1 zeigt schematisch ein Beispiel eines Kantenprofils 111 zwischen zwei platten- oder scheibenförmigen, rahmenlosen Seitenelementen 2, 2 einer Seitenkante 110 eines Behältnisses, wie beispielsweise des Behältnisses 10 aus Figur 9, in einer geschnittenen Draufsicht. Das Behältnis ist vorzugsweise eine Vitrine.

Die Seitenelemente 2, 2 haben jeweils eine Gehrung 20 wenigstens an ihrem zu dem Kantenprofil 111 zeigenden Ende. Das diese Gehrung 20 aufweisende Ende der Seitenelemente 2, 2 ist jeweils in einer Aufnahme 112 des Kantenprofils 111 aufgenommen. Das Kantenprofil 111 weist ein erstes Kantenprofilteil 113 und ein dazu spiegelsymmetrisch ausgebildetes zweites Kantenprofilteil 114 auf.

Der Querschnitt des ersten Kantenprofilteils 113 und der Querschnitt des zweiten Kantenprofilteils 114 weisen jeweils einen dreieckförmigen Außenabschnitt 115, 115` und einen dreieckförmigen Innenabschnitt 116, 116` auf. In dem Beispiel ist der Außenabschnitt 115, 115 mit dem Innenabschnitt 116, 116' einstückig ausgebildet. In anderen, nicht gezeigten Beispielen kann der Au-βenabschnitt 115, 115` auch mit dem Innenabschnitt 116, 116' fest verbundenen sein.

Der Außenabschnitt 115, 115' weist jeweils eine Außenabschnittshypotenuse 117, eine erste Außenabschnittskathete 118 und eine zweite Außenabschnittskathete 119 auf. Zwischen der ersten Außenabschnittskathete 118 und der zweiten Außenabschnittskathete 119 ist ein rechter Winkel ausgebildet.

Der Innenabschnitt 116, 116' weist jeweils eine Innenabschnittshypotenuse 137, eine erste Innenabschnittskathete 138 und eine zweite Innenabschnittskathete 139 auf. Zwischen der Innenabschnittshypotenuse 137 und der ersten Innenabschnittskathete 138 ist ein spitzer Winkel ausgebildet. Zwischen der ersten Innenabschnittskathete 138 und der zweiten Innenabschnittskathete 139 ist ein rechter Winkel ausgebildet.

Die Außenabschnittshypotenuse 117 und die Innenabschnittshypotenuse 137 verlaufen parallel zueinander. Zwischen der zweiten Außenabschnittskathete 119 und der Innenabschnittshypotenuse 137 ist die spitzwinklige Aufnahme 112 ausgebildet. Die erste Au-βenabschnittskathete 118 verläuft parallel zu der ersten Innenabschnittskathete 138. Jedes der Kantenprofilteile 113, 114 weist einen parallel zu der jeweiligen ersten Außenabschnittskathete 118 verlaufenden Einschnitt 140 auf.

Das Kantenprofil 111 weist ferner eine einen U-förmigen Querschnitt aufweisende Verbindungs- und/oder Dichtungseinheit 160 mit zwei Verbindungsschenkeln 161, 162 auf, die in die beiden Einschnitte 140 von außen eingebracht oder einbringbar sind. In der in Figur 1 gezeigten Ausführungsform der Erfindung ist die Verbindungs- und/oder Dichtungseinheit 160 als eine U-förmige Klammer ausgebildet, deren Verbindungsschenkel 161, 162 stets parallel zueinander ausgerichtet und durch einen Verbindungssteg 163 miteinander verbunden sind.

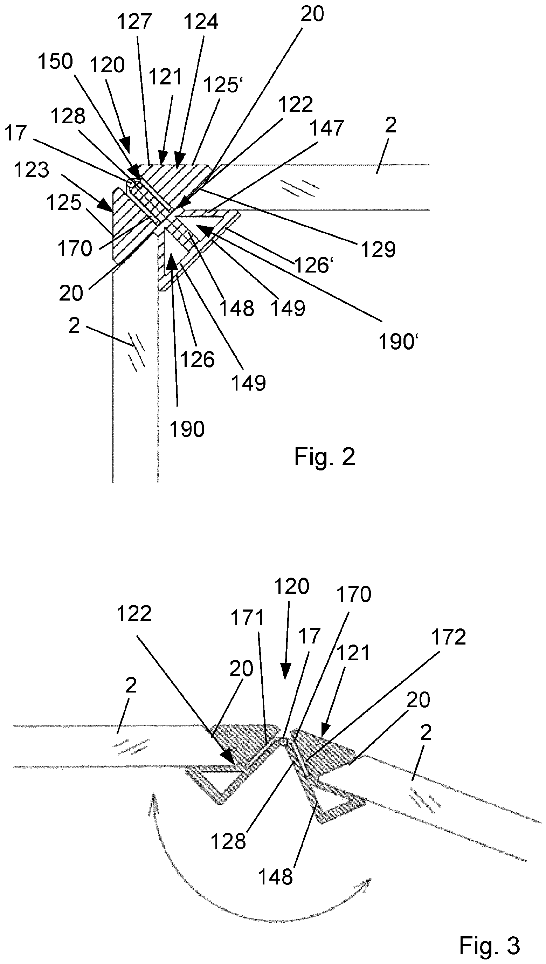

Die Figuren 2 und 3 sind Teilansichten einer Seitenkante 120 eines anderen Behältnisses, wo ein Kantenprofil 121 zwei platten- oder scheibenförmige, rahmenlose Seitenelemente 2, 2 verbindet.

Die Seitenelemente 2, 2 haben jeweils eine Gehrung 20 wenigstens an ihrem zu dem Kantenprofil 121 zeigenden Ende. Das diese Gehrung 20 aufweisende Ende der Seitenelemente 2, 2 ist jeweils in einer Aufnahme 122 des Kantenprofils 121 aufgenommen. Das Kantenprofil 121 weist ein erstes Kantenprofilteil 123 und ein dazu spiegelsymmetrisch ausgebildetes zweites Kantenprofilteil 124 auf.

Der Querschnitt des ersten Kantenprofilteils 123 und der Querschnitt des zweiten Kantenprofilteils 124 weist jeweils einen dreieckförmigen Außenabschnitt 125, 125` und einen dreieckförmigen Innenabschnitt 126, 126` auf. In dem gezeigten Beispiel ist der Außenabschnitt 125, 125 mit dem Innenabschnitt 126, 126` einstückig ausgebildet. In anderen, nicht gezeigten Beispielen kann der Außenabschnitt 125, 125` auch mit dem Innenabschnitt 126, 126` fest verbunden sein.

Der Außenabschnitt 125, 125' weist jeweils eine Außenabschnittshypotenuse 127, eine erste Außenabschnittskathete 128 und eine zweite Außenabschnittskathete 129 auf. Zwischen der ersten Außenabschnittskathete 128 und der zweiten Außenabschnittskathete 129 ist ein rechter Winkel ausgebildet.

Der Innenabschnitt 126, 126' weist jeweils eine Innenabschnittshypotenuse 147, eine erste Innenabschnittskathete 148 und eine zweite Innenabschnittskathete 149 auf. Zwischen der Innenabschnittshypotenuse 147 und der ersten Innenabschnittskathete 148 ist ein spitzer Winkel ausgebildet. Zwischen der ersten Innenabschnittskathete 148 und der zweiten Innenabschnittskathete 149 ist ein rechter Winkel ausgebildet.

Die Außenabschnittshypotenuse 127 und die Innenabschnittshypotenuse 147 verlaufen parallel zueinander. Zwischen der zweiten Außenabschnittskathete 129 und der Innenabschnittshypotenuse 147 ist die spitzwinklige Aufnahme 122 ausgebildet. Die erste Au-βenabschnittskathete 128 verläuft parallel zu der ersten Innenabschnittskathete 148. Jedes der Kantenprofilteile 123, 124 weist einen parallel zu der jeweiligen ersten Außenabschnittskathete 128 verlaufenden Einschnitt 150 auf.

Das Kantenprofil 121 weist ferner eine einen V-förmigen Querschnitt aufweisende Verbindungs- und/oder Dichtungseinheit 170 mit zwei Verbindungsschenkeln 171, 172 auf, die in die beiden Einschnitte 150 von außen eingebracht oder einbringbar sind. Die Verbindungsschenkel 171, 172 sind in dem dargestellten Ausführungsbeispiel Schenkel eines Scharniers, also über ein Gelenk 17 gelenkig miteinander verbunden, können aber in anderen Ausführungsformen der Erfindung auch Schenkel einer C-förmigen Dichtung sein, die ein staubdichtes Verschließen der Kantenprofilteile 123, 124 ermöglicht.

In dem in den Figuren 2 und 3 gezeigten Beispiel sind die beiden Kantenprofilteile 123, 124 an den Außenenden ihrer ersten Außenabschnittskatheten 128 durch ein Gelenk 17 verbunden. Durch das Gelenk 17 können die Kantenprofilteile 123, 124 und damit die Seitenelemente 2, 2 - wie in Figur 3 gezeigt - auseinander geklappt und - wie in Figur 2 gezeigt - zusammen geklappt werden.

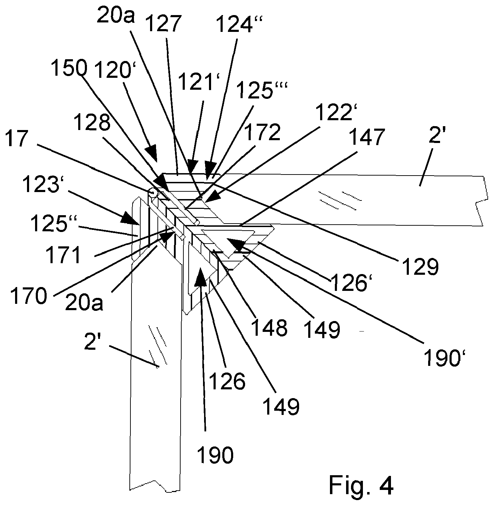

Figur 4 zeigt schematisch ein weiteres Beispiel eines Kantenprofils 121' zwischen zwei, jeweils an ihrem Ende jeweils eine Spitze 20a aufweisenden, platten- oder scheibenförmigen, rahmenlosen Seitenelementen 2, 2` eines Behältnisses in einer geschnittenen Draufsicht.

Die Seitenelemente 2', 2` haben jeweils eine Spitze 20a wenigstens an ihrem zu dem Kantenprofil 121' zeigenden Ende. Das diese Spitze 20a aufweisende Ende der Seitenelemente 2', 2' ist jeweils in einer Aufnahme 122' des Kantenprofils 121' aufgenommen. Das Kantenprofil 121' weist ein erstes Kantenprofilteil 123' und ein dazu spiegelsymmetrisch ausgebildetes zweites Kantenprofilteil 124' auf.

Der Querschnitt des ersten Kantenprofilteils 123' und der Querschnitt des zweiten Kantenprofilteils 124` weist jeweils einen dreieckförmigen Außenabschnitt 125", 125‴ und einen dreieckförmigen Innenabschnitt 126, 126` auf. In dem gezeigten Ausführungsbeispiel ist der Außenabschnitt 125", 125‴ mit dem jeweiligen Innenabschnitt 126, 126' einstückig ausgebildet. In anderen, nicht gezeigten Beispielen kann der Außenabschnitt 125", 125‴ auch mit dem jeweiligen Innenabschnitt 126, 126` fest verbunden sein.

Der Außenabschnitt 125", 125‴ weist jeweils eine Außenabschnittshypotenuse 127, eine erste Außenabschnittskathete 128 und eine zweite Außenabschnittskathete 129 auf. Zwischen der ersten Außenabschnittskathete 128 und der zweiten Außenabschnittskathete 129 ist ein rechter Winkel ausgebildet.

Der Innenabschnitt 126, 126' weist jeweils eine Innenabschnittshypotenuse 147, eine erste Innenabschnittskathete 148 und eine zweite Innenabschnittskathete 149 auf. Zwischen der Innenabschnittshypotenuse 147 und der ersten Innenabschnittskathete 148 ist ein spitzer Winkel ausgebildet. Zwischen der ersten Innenabschnittskathete 148 und der zweiten Innenabschnittskathete 149 ist ein rechter Winkel ausgebildet.

Die Außenabschnittshypotenuse 127 und die Innenabschnittshypotenuse 147 verlaufen parallel zueinander. Zwischen der zweiten Außenabschnittskathete 129 und der Innenabschnittshypotenuse 147 ist eine winklige Aufnahme 122' ausgebildet. Die erste Au-βenabschnittskathete 128 verläuft parallel zu der ersten Innenabschnittskathete 148. Jedes der Kantenprofilteile 123', 124` weist einen parallel zu der jeweiligen ersten Au-βenabschnittskathete 128 verlaufenden Einschnitt 150 auf.

Das Kantenprofil 121' weist ferner eine einen V-förmigen Querschnitt aufweisende Verbindungs- und/oder Dichtungseinheit 170 mit zwei Verbindungsschenkeln 171, 172 auf, die in die beiden Einschnitte 150 von außen eingebracht oder einbringbar sind.

In dem in Figur 4 gezeigten Beispiel sind die beiden Kantenprofilteile 123', 124` an den Außenenden ihrer ersten Außenabschnittskatheten 128 durch ein Gelenk 17 verbunden. Durch das Gelenk 17 können die Kantenprofilteile 123', 124` und damit die Seitenelemente 2', 2' - wie in Figur 3 gezeigt - auseinander geklappt und - wie in Figur 4 gezeigt - zusammen geklappt werden.

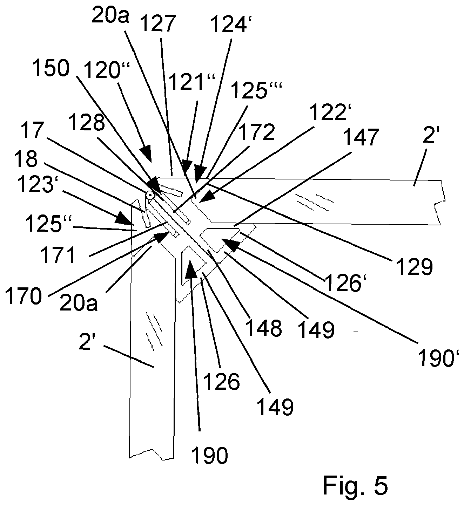

Figur 5 zeigt schematisch ein weiteres Beispiel eines Kantenprofils 121" zwischen zwei, jeweils an ihrem Ende jeweils eine Spitze 20a aufweisenden, platten- oder scheibenförmigen, rahmenlosen Seitenelementen 2`, 2` eines Behältnisses in einer geschnittenen Draufsicht. Das Kantenprofil 121" von Figur 5 ist eine Abwandlung der Ausführungsform des Kantenprofils 121' von Figur 4. Dabei bezeichnen gleiche Bezugszeichen gleiche oder ähnliche Elemente wie in dem Beispiel von Figur 4, weshalb hier vollständig auf die obige Beschreibung dieser Elemente verwiesen wird.

In Abwandlung von dem Beispiel in Figur 4 weist das Beispiel von Figur 5 beidseitig des Gelenks 17 jeweils eine Kammer 18 in den jeweiligen Außenabschnitten 125", 125‴ der Kantenprofilteile 123', 124` auf. Dadurch ist es möglich, eine Abdeckung, wie beispielsweise Gummidichtung o. ä., über das Gelenk 17 zu legen oder zu stecken, um dieses abzudecken. Dabei können die jeweiligen Enden der Abdeckung in die Kammern 18 gesteckt werden. Durch diese Abdeckung ist das Gelenk 17 von außen nicht sichtbar. Entsprechend hat ein dieses Beispiel aufweisendes Behältnis, wie eine Vitrine, allseitig das gleiche, optische ansprechende Aussehen.

In den in den Figuren 1 bis 5 gezeigten Beispiele sind Ecken der Kantenprofilteile 113, 114, 123, 123`, 124, 124' abgeflacht. In anderen, nicht gezeigten Beispielen können diese Ecken auch abgerundet oder kantig sein.

In den in den Figuren 1 bis 5 gezeigten Beispielen sind die Au-βenabschnitte 115, 115`, 125, 125`, 125", 125‴ der Kantenprofilteile 113, 114, 123, 123', 124, 124' aus Vollmaterial, z. B. aus Aluminium, ausgebildet. Die Innenabschnitte 116, 116`, 126, 126` der der Kantenprofilteile 113, 114, 123, 123', 124, 124` können auch aus Aluminium ausgebildet, sind jedoch innen hohl. Somit können die ausgebildeten Hohlräume 190, 190' beispielsweise zur Kabelführung genutzt werden.

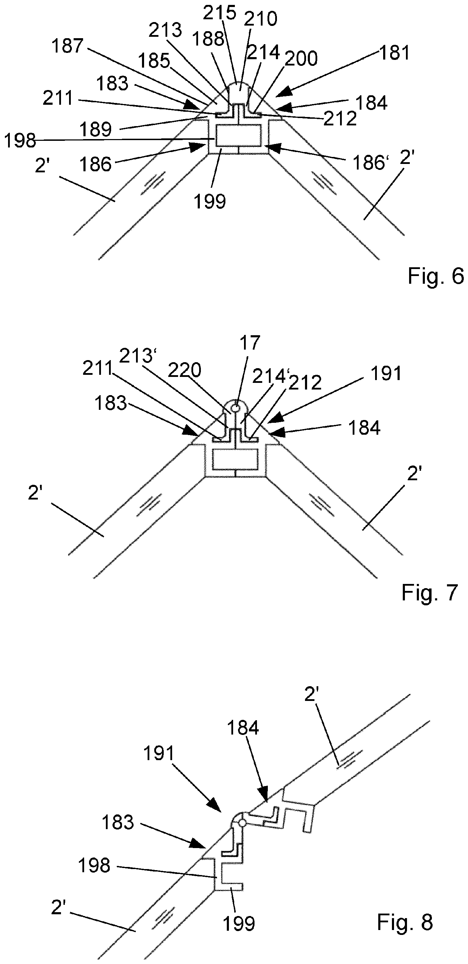

Figur 6 zeigt schematisch ein weiteres Beispiel eines Kantenprofils 181 zwischen zwei platten- oder scheibenförmigen, rahmenlosen Seitenelementen 2`, 2' eines Behältnisses in geschlossenem Zustand in einer geschnittenen Draufsicht.

Das Kantenprofil 181 ist für die Verbindung von zwei Seitenelementen 2ù, 2' vorgesehen, die jeweils an den einander zugewandten Enden der Seitenelemente 2', 2' eine Spitze 20a aufweisen.

Das Kantenprofil 181 weist ein erstes Kantenprofilteil 183 und ein dazu spiegelsymmetrisch ausgebildetes zweites Kantenprofilteil 184 auf.

Die Kantenprofilteile 183, 184 weisen jeweils in ihrem Querschnitt einen dreieckförmigen Außenabschnitt 185 mit einer Außenabschnittshypotenuse 187, einer ersten Außenabschnittskathete 188 und einer zweiten Außenabschnittskathete 189, zwischen welchen ein rechter Winkel ausgebildet ist, auf.

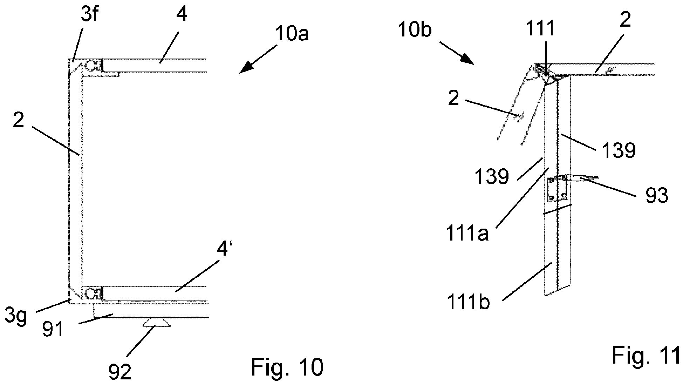

Mit dem jeweiligen Außenabschnitt 185 ist jeweils ein Innenabschnitt 186 einstückig ausgebildet oder fest verbunden. Der jeweilige Innenabschnitt 186 hat in seinem Querschnitt die Form eines rechten Winkels. Der jeweilige Innenabschnitt 186 weist jeweils eine erste Innenabschnittskathete 198 und eine zweite Innenabschnittskathete 199 auf. Die jeweilige Innenabschnittskathete 198 liegt fest an einer Seite der Spitze 20a des jeweils angrenzenden Seitenelementes 2`, 2` an. Bei geschlossenem Kantenprofil 181 liegen jeweils die zweiten Innenabschnittskatheten 199 der Innenabschnitte 186 beider Kantenprofilteile 183, 184 auf einer gedachten Gerade. Die beiden Innenabschnittskatheten 199 bilden also im geschlossenen Zustand des Innenprofils 181, also bei geschlossener Tür eines Behältnisses, eine durchgehende Innenfläche in der Ecke des jeweiligen Behältnisses, wie z. B. des Behältnisses 10 aus Figur 9, aus, wobei an diese Innenfläche beispielsweise, wie nachfolgend in Figur 11 zu sehen, z. B. ein Zwischenbodenträgerelement 93 montiert werden kann.

Jedes der Kantenprofilteile 183, 184 weist im gezeigten Querschnitt in seinem jeweiligen Außenabschnitt 185 einen parallel zu der jeweiligen zweiten Außenabschnittskathete 189 verlaufenden Einschnitt 200 in die jeweilige erste Außenabschnittskathete 188 auf. Das Kantenprofil 181 weist ferner eine Verbindungs- und/oder Dichtungseinheit 210 mit zwei L-förmigen Verbindungsschenkeln 211, 212 auf, die in die beiden Einschnitte 200 eingebracht sind.

Die Verbindungs- und/oder Dichtungseinheit 210, die in dem Beispiel von Figur 6 zum Einsatz kommt, ist eine Doppel-L-förmige Klammer, deren Verbindungsschenkel 213, 214 stets parallel zueinander sind und an einer Außenseite der Verbindungs-und/oder Dichtungseinheit 210 durch einen festen Überbrückungssteg 215 verbunden sind. Beispielsweise kann die starre Verbindungs- und/oder Dichtungseinheit 210 als Aluminiumprofil ausgebildet sein. Sie wirkt als Halteklammer.

Figur 7 zeigt schematisch eine Ausführungsform eines erfindungsgemäßen Kantenprofils 191 zwischen zwei platten- oder scheibenförmigen, rahmenlosen Seitenelementen 2, 2' eines Behältnisses in geschlossenem Zustand in einer geschnittenen Draufsicht. In Figur 8 ist das Kantenprofil 191 von Figur 7 in geöffnetem Zustand in einer geschnittenen Draufsicht dargestellt.

Wie in dem Beispiel von Figur 6 ist auch das erfindungsgemäße Kantenprofil 191 der Figuren 7 und 8 für die Verbindung von zwei Seitenelementen 2', 2' vorgesehen, die jeweils an den einander zugewandten Enden der Seitenelemente 2', 2' eine Spitze 20a aufweisen. Die Außenabschnitte 185 und die Innenabschnitte 186 des ersten Kantenprofilteils 183 und des zweiten Kantenprofilteils 184 des Kantenprofils 191 sind wie die Außenabschnitte 185 und die Innenabschnitte 186 des ersten Kantenprofilteils 183 und des zweiten Kantenprofilteils 184 des Kantenprofils 181 aus Figur 6 ausgebildet, weshalb an dieser Stelle auf obige Beschreibung dieser Elemente verwiesen wird.

Das Kantenprofil 191 weist jedoch im Unterschied zu dem Kantenprofil 181 ein Gelenk 17 auf, durch das die Seitenelemente 2, 2' von dem in Figur 7 gezeigten geschlossenen Zustand in den in Figur 8 gezeigten geöffneten Zustand und umgekehrt klappbar sind. Das Gelenk 17 ist Bestandteil einer Verbindungs- und/oder Dichtungseinheit 220, die zwischen die Kantenprofilteile 183, 184 des Kantenprofils 191 eingebracht ist und als Scharnier wirkt. Die Verbindungs- und/oder Dichtungseinheit 220 weist, wie die Verbindungs- und/oder Dichtungseinheit 210 des Kantenprofils 181, beidseitig auskragende Verbindungsnasen 211, 212 auf, die in die beiden Einschnitte 200, die in den jeweiligen Außenabschnitten 185 ausgebildet sind, eingebracht sind.

Da die Kantenprofilteile 183, 184 der Kantenprofile 181, 191 gleich ausgebildet sind, lassen sich die jeweiligen Kantenprofilteile 183, 184 sowohl durch die in Figur 6 gezeigte Verbindungs- und/oder Dichtungseinheit 210 als auch durch die in den Figuren 7 und 8 gezeigte Verbindungs- und/oder Dichtungseinheit 220 verbinden. Die jeweilige Verbindungs- und/oder Dichtungseinheit 210, 220 lässt sich bei aufgestellten Seitenelementen 2', 2' von oben in den jeweils zwischen den Außenabschnitten 185 vorgesehenen Abstand einschieben.

Muss beispielsweise das jeweilige Behältnis, wie beispielsweise eine Vitrine, noch bestückt werden, empfiehlt sich der Einsatz der in den Figuren 7 und 8 gezeigten Verbindungs- und/oder Dichtungseinheit 220. Dadurch wird eine Drehtür ausgebildet.

Ist das Behältnis bestückt, kann man die Verbindungs- und/oder Dichtungseinheit 220 wieder herausschieben und stattdessen die in Figur 6 gezeigte Verbindungs- und/oder Dichtungseinheit 210 zwischen die Kantenprofilteile 183, 184 einschieben. Mit dem festen Kantenprofil 181 ist das Behältnis starr. Das Kantenprofil 181 ist dabei vorzugsweise so lang wie die Höhe der jeweiligen Seitenelemente 2`, 2`. Die Kantenprofilteile 183, 184 der Kantenprofile 181, 191 sind fest mit den jeweils angrenzenden Seitenelementen 2', 2`, die vorzugsweise Glasscheiben sind, verklebt. Möchte man das jeweilige Behältnis wieder öffnen, kann die Verbindungs- und/oder Dichtungseinheit 210 durch die Verbindungs- und/oder Dichtungseinheit 220 ausgetauscht werden.

Beide Verbindungs- und/oder Dichtungseinheiten 210, 220 können einfach installiert werden, ohne dass man schrauben muss.

Figur 9 zeigt schematisch eine Ausführungsform eines Behältnisses 10 der vorliegenden Erfindung in einer perspektivischen Ansicht. Das Behältnis 10 ist quaderförmig. Das Behältnis 10 ist in der gezeigten Darstellung eine Vitrine, kann aber auch ein Kasten oder ähnliches sein.

Das Behältnis 10 weist vier rahmenlose Seitenelemente 2 auf. Die Seitenelemente 2 sind rechteckig. Die Seitenelemente 2 sind in der gezeigten Ausführungsform durchsichtige Scheiben, bestehen also aus einem durchsichtigen Material, wie z. B. Glas. In der gezeigten Ausführungsform sind die Kanten der Seitenelemente 2 wie in Figur 7, also mit einer als spitzer Winkel ausgebildeten Gehrung, ausgebildet. In anderen, nicht gezeigten Ausführungsformen der Erfindung können die Kanten der Seitenelemente 2 auch spitzenförmig ausgebildet sein, wie es in Figur 4 schematisch gezeigt ist.

Ferner weist das Behältnis 10 eine Bodenplatte 4' und eine Deckplatte 4 auf.

In der gezeigten Ausführungsform besteht auch die Deckplatte 4 aus durchsichtigem Material, wie z. B. Glas. Die Bodenplatte 4' kann beispielsweise aus Holz oder Aluminium oder auch aus Glas bestehen.

Wie es schematisch in Figur 9 zu sehen ist, sind an den oberen Enden der Seitenelemente 2 Profilleisten 3f, wie sie in Figur 10 sowie in der Druckschrift DE 10 2017 125 547 B3 gezeigt sind, angeordnet. Diese Profilleisten 3f halten die Deckplatte 4.

Weiterhin ist in Figur 9 schematisch gezeigt, dass an unteren Enden der Seitenelemente 2 Profilleisten 3g, wie sie in Figur 10 sowie in der Druckschrift DE 10 2017 125 547 B3 gezeigt sind, angeordnet sind. Diese Profilleisten 3g halten die Bodenplatte 4`.

In anderen Ausführungsformen der vorliegenden Erfindung können anstelle der Profilleisten 3f, 3g auch andere Profilleisten, wie sie beispielsweise zusätzlich in der Druckschrift DE 10 2017 125 547 B3 gezeigt sind, verwendet werden.

Die Seitenelemente 2 des Behältnisses 10 sind an ihren vertikalen Seitenkanten mittels Kantenprofilen 111, wie sie in Figur 1 gezeigt sind, verbunden. In anderen Ausführungsformen der Erfindung können die Seitenelemente 2 auch mittels des in den Figuren 2 und 3 dargestellten Kantenprofils 121 verbunden sein.

Anstelle der Seitenelemente 2 können jedoch auch Seitenelemente 2' mit jeweils einer Spitze 20a eingesetzt werden, die an ihren Enden jeweils mittels eines der Kantenprofile 121', 121", 181 der Figuren 4 bis 8 verbunden sind.

Die Kantenprofile 111 und die Profilleisten 3f, 3g bilden zusammen einen Rahmen aus.

Figur 10 zeigt schematisch ein Detail einer Ausführungsform eines Behältnisses 10a der vorliegenden Erfindung in einer Seitenansicht. Das Behältnis 10a ist in der gezeigten Darstellung eine Vitrine, kann aber auch ein Kasten oder ähnliches sein. Das Behältnis 10a ist ähnlich wie das Behältnis 10 aus Figur 6 aufgebaut.

Das Behältnis 10a weist vier rahmenlose Seitenelemente 2, wie oben erläutert, eine Bodenplatte 4' und eine Deckplatte 4 auf. In der gezeigten Ausführungsform bestehen die Deckplatte 4 als auch die Seitenelemente 2 aus Glas. An den oberen Enden der Seitenelemente 2 sind Profilleisten 3f angeordnet. Diese Profilleisten 3f halten die Deckplatte 4. Es ist ferner schematisch in Figur 10 zu sehen, dass an den unteren Enden der Seitenelemente 2 Profilleisten 3g angeordnet sind. Diese Profilleisten 3g halten die Bodenplatte 4'.

Unter der Bodenplatte 4' ist ein Unterboden 91 vorgesehen. Das Behältnis 10a steht auf Füßen 92, die unten an dem Unterboden 91 vorgesehen sind.

Figur 11 zeigt schematisch ein anderes Detail einer Ausführungsform eines Behältnisses 10b der vorliegenden Erfindung in einer perspektivischen Sicht in eine Ecke des Behältnisses 10b. Das Behältnis 10b ist in der gezeigten Darstellung eine Vitrine, kann aber auch ein Kasten oder ähnliches sein. Das Behältnis 10b ist ähnlich wie das Behältnis 10 aus Figur 9 aufgebaut und weist vier rahmenlose Seitenelemente 2, wie oben erläutert, eine Bodenplatte 4`, eine Deckplatte 4 und Profilleisten auf. Wie oben beschrieben, kann insbesondere die Form der Seitenkanten der Seitenelemente 2 und der verwendeten Profilleisten in anderen Ausführungsformen der vorliegenden Erfindung differieren.

Die Seitenelemente 2 des Behältnisses 10b sind an ihren vertikalen Seitenkanten mittels Kantenprofilen 111, wie sie in Figur 1 gezeigt sind, verbunden.

Wie es oben im Hinblick auf Figur 1 erläutert ist, weist das Kantenprofil 111 Innenabschnittskatheten 139 auf, die zusammen eine flache Oberfläche ausbilden. Auf einer solchen flachen Oberfläche ist wenigstens ein Zwischenbodenträgerelement 93 montiert. Da in der Praxis in allen vier Ecken des Behältnisses 10b ein solches Zwischenbodenträgerelement 93, jeweils auf gleicher Höhe, montiert ist, kann auch diese vier Zwischenbodenträgerelemente 93 beispielsweise ein Zwischenboden des Behältnisses 10b aufgelegt werden.

Weiterhin besteht in der Ausführungsform von Figur 11 das Kantenprofil 111 aus wenigstens zwei Kantenprofilstücken 111a, 111b, die miteinander verbunden sind. So können solche Kantenprofilstücke 111a, 111b zur Ausbildung längerer Kantenprofile 111 zusammengesteckt werden.

Anstelle des Kantenprofils 111 kann auch ein anderes Kantenprofil, wie beispielsweise das Kantenprofil 121 aus Figur 2 oder 3 oder das Kantenprofil 121' aus den Figuren 4 und 5 oder das Kantenprofil aus den Figuren 6 bis 8, in Abhängigkeit von der Form der Seitenkanten der verwendeten Seitenelemente 2, verwendet werden.

## Patentansprüche

1. Kantenprofil (181, 191) zur Verbindung von zwei platten- oder scheibenförmigen, rahmenlosen Seitenelementen (2`, 2`) eines Behältnisses, die jeweils wenigstens an ihren dem Kantenprofil (181, 191) zugewandten Enden eine Spitze (20a) aufweisen, wobei jeweils eine Innenseite des jeweiligen Seitenelementes (2`, 2`) mit der jeweils daran anliegenden Seite der Spitze (20a) einen stumpfen Winkel bildet,
wobei das Kantenprofil (181, 191) wenigstens ein erstes Kantenprofilteil (183) und wenigstens ein dazu spiegelsymmetrisch ausgebildetes zweites Kantenprofilteil (184) aufweist, deren Querschnitt jeweils einen dreieckförmigen Außenabschnitt (185) mit einer Außenabschnittshypotenuse (187), einer ersten Außenabschnittskathete (188) und einer zweiten Außenabschnittskathete (189), zwischen welchen ein rechter Winkel ausgebildet ist, und einen mit dem Außenabschnitt (185) einstückig ausgebildeten oder fest verbundenen, in Form eines rechten Winkels ausgebildeten Innenabschnitt (186) aufweist, wobei jeweils erste Innenabschnittskatheten (198) der Innenabschnitte (186) beider Kantenprofilteile (183, 184) fest an einer Seite der Spitze (20a) des jeweils angrenzenden Seitenelementes (2`, 2`) anliegen können und bei geschlossenem Kantenprofil (181) jeweils zweite Innenabschnittskatheten (199) der Innenabschnitte (186) beider Kantenprofilteile (183, 184) auf einer Gerade liegen; die ersten Außenabschnittskatheten (188) der Kantenprofilteile (183, 184) bei geschlossenen Kantenprofil (181) parallel zueinander, in einem Abstand voneinander ausgerichtet sind, jedes der Kantenprofilteile (183, 184) in seinem jeweiligen Außenabschnitt (185) einen parallel zu der jeweiligen zweiten Außenabschnittskathete (189) verlaufenden Einschnitt (200) in die jeweilige erste Außenabschnittskathete (188) aufweist; und das Kantenprofil (181) eine in den Abstand, den die Außenabschnittskatheten (188) voneinander haben, eingebrachte Verbindungs- und/oder Dichtungseinheit (210, 220) aufweist, wobei die Verbindungs- und/oder Dichtungseinheit (210; 220) beidseitig auskragende Verbindungsnasen (211; 212) aufweist, die in die beiden Einschnitte (200) eingebracht sind, wobei die Kantenprofilteile (113, 123; 114, 124; 123', 124'; 183, 184) an äußeren Enden ihrer ersten Außenabschnittskatheten (118, 128, 188) mit einem Gelenk (17) verbunden sind.

2. Kantenprofil nach Anspruch 1, **dadurch gekennzeichnet, dass** die Verbindungs-und/oder Dichtungseinheit (160; 210) als eine starre U-, V- oder Dopple-L-förmige Klammer ausgebildet ist, deren Verbindungsschenkel (161, 162; 213, 214) an einer Außenseite der Verbindungs- und/oder Dichtungseinheit (160; 210) direkt oder durch einen festen Überbrückungssteg (163; 215) verbunden sind.

3. Kantenprofil nach Anspruch 1 oder 2, **dadurch gekennzeichnet, dass** die Verbindungs- und/oder Dichtungseinheit (220) als eine Doppel-L-förmige Klammer ausgebildet ist, deren Verbindungsschenkel (213', 214`) durch das Gelenk (17) verbunden sind.

4. Kantenprofil nach einem der vorhergehenden Ansprüche, **dadurch gekennzeichnet, dass** in den Außenabschnitten (125", 125‴) der Kantenprofilteile (123', 124') beidseitig des Gelenks (17) nach außen offene Kammern (18) ausgebildet sind.

5. Kantenprofil nach einem der vorhergehenden Ansprüche, **dadurch gekennzeichnet, dass** die Außenabschnitte (115, 115'; 125, 125`; 185) der Kantenprofilteile (113, 123; 114, 124; 123', 124`; 183, 184) aus Vollmaterial ausgebildet sind.

6. Kantenprofil nach einem der vorhergehenden Ansprüche, **dadurch gekennzeichnet, dass** das Kantenprofil (111, 121, 121', 121", 181, 191) aus wenigstens zwei vertikal übereinander angeordneten Kantenprofilstücken (111a, 111b) ausgebildet ist.

7. Kantenprofil nach einem der vorhergehenden Ansprüche, **dadurch gekennzeichnet, dass** wenigstens zwei nebeneinander liegende Innenabschnitte (116, 116'; 126, 126'; 186, 186`) zusammen eine ebene Ablage- oder Montagefläche ausbilden.

8. Kantenprofil nach einem der vorhergehenden Ansprüche, **dadurch gekennzeichnet, dass** Ecken der Kantenprofilteile (113, 123; 114, 124; 123', 124`; 183, 184) abgeflacht oder abgerundet sind.

9. Behältnis (10) mit wenigstens einem Kantenprofil (111, 121, 121', 121", 181, 191) nach einem der vorhergehenden Ansprüche, mit dem zwei platten- oder scheibenförmige, rahmenlose Seitenelemente (2, 2; 2`, 2`) des Behältnisses (10), die jeweils wenigstens an ihrem dem Kantenprofil (111, 121, 121', 121", 181, 191) zugewandten Ende eine Gehrung (20) aufweisen, wobei jeweils eine Innenseite der Seitenelemente (2, 2) mit der Gehrung (20) einen spitzen Winkel ausbildet, oder eine Spitze (20a) aufweisen, wobei jeweils eine Innenseite des jeweiligen Seitenelementes (2`, 2`) mit der jeweils daran anliegenden Seite der Spitze (20a) einen stumpfen Winkel bildet, verbunden sind.

## Claims

1. Edge profile (181, 191) for connecting two plate-shaped or disk-shaped, frameless side elements (2', 2') of a container, which elements each have a tip (20a) at least on their ends facing the edge profile (181, 191), wherein an inner side of each side element (2', 2') forms an obtuse angle with the side of the tip (20a) abutting said element, wherein
the edge profile (181, 191) has at least one first edge profile part (183) and at least one second edge profile part (184) which is mirror-symmetrical to the first, each cross section of which has a triangular outer portion (185) having an outer portion hypotenuse (187), a first outer portion cathetus (188) and a second outer portion cathetus (189), between which a right angle is formed, and has an inner portion (186), which is integrally formed with or securely connected to the outer portion (185), in the form of a right angle, wherein first inner portion catheta (198) of the inner portions (186) of both edge profile parts (183, 184) can rest firmly against a side of the tip (20a) of the respective side element (2', 2') and in the closed edge profile (181), in each case, second inner portion catheters (199) of the inner portions (186) of both edge profile parts (183, 184) are arranged on a straight line; the first outer portion catheta (188) of the edge profile parts (183, 184) in the closed edge profile (181) are parallel to one another, at a distance from one another, each of the edge profile parts (183, 184) in its respective outer portion (185) having an incision (200) in the respective outer portion cathetus (189) which extends in parallel to the respective second outer portion cathetus (189), and the edge profile (181) having a connecting and/or sealing unit (210, 220) being brought into the distance, which have the outer portion catheta (188) from each other, wherein the connecting and/or sealing unit (210; 220) having connecting lugs (211; 212) cantilevering on both sides and being brought in both incisions (200), wherein the edge profile parts (113, 123; 114, 124; 123', 124', 183, 184) are connected with a hinge (17) on the outer ends of their first outer portion catheta (118, 128, 188).

2. Edge profile according to claim 1, **characterized in that** the connecting and/or sealing unit (160; 210) is designed as a rigid U-shaped, V-shaped or double-L-shaped clip, the connecting legs (161, 162; 213, 214) of which are connected directly or via a fixed bridging web (163; 215) at an outer side of the connection and/or sealing unit (160; 210).

3. Edge profile according to either claim 1 or claim 2, **characterized in that** the connecting and/or sealing unit (220) is designed as a double-L-shaped clip, the connecting legs (213', 214') of which are connected by the hinge (17).

4. Edge profile according to any of the preceding claims, **characterized in that,** in the outer portions (125", 125‴) of the edge profile parts (123', 124'), chambers (18) which are open to the outside are formed on both sides of the hinge (17).

5. Edge profile according to any of the preceding claims, **characterized in that** the outer portions (115, 115'; 125, 125'; 185) of the edge profile parts (113, 123; 114, 124; 123', 124'; 183, 184) are formed from solid material.

6. Edge profile according to any of the preceding claims, **characterized in that** the edge profile (111, 121, 121', 121", 181, 191) is formed from at least two edge profile pieces (111a, 111b) which are arranged vertically one above the other.

7. Edge profile according to any of the preceding claims, **characterized in that** at least two adjacent inner portions (116, 116'; 126, 126'; 186, 186') together form a planar storage or mounting surface.

8. Edge profile according to any of the preceding claims, **characterized in that** corners of the edge profile parts (113, 123; 114, 124; 123', 124'; 183, 184) are flattened or rounded.

9. Container (10) having at least one edge profile (111, 121, 121', 121", 181, 191) according to any of the preceding claims, to which two plate-shaped or disk-shaped, frameless side elements (2, 2; 2', 2') of the container (10) are connected, which elements each have a miter joint (20) at least at their end facing the edge profile (111, 121, 121', 121", 181, 191), wherein an inner side of the side elements (2, 2) forms an acute angle with the miter joint (20), respectively, or have a tip (20a), wherein an inner side of each side element (2', 2') forms an obtuse angle with the side of the tip (20a) abutting said element.

## Revendications

1. Profilé d'arête (181, 191) permettant de relier deux éléments latéraux (2', 2`) en forme de plaque ou de vitre et sans cadre d'un récipient, lesquels présentent, au moins au niveau de leurs extrémités orientées vers le profilé d'arête (181, 191), respectivement une pointe (20a), respectivement une face interne de l'élément latéral (2', 2') respectif formant un angle obtus avec le côté respectivement adjacent de la pointe (20a),
le profilé d'arête (181, 191) présentant au moins une première partie de profilé d'arête (183) et au moins une seconde partie de profilé d'arête (184) réalisée de manière symétrique par rapport à celle-ci, dont la section transversale présente respectivement une section externe (185) triangulaire comportant une hypoténuse de section externe (187), un premier côté d'angle droit de section externe (188) et un second côté d'angle droit de section externe (189), entre lesquels un angle droit est formé, et une section interne (186) réalisée d'une seule pièce avec la section externe (185) ou reliée de manière fixe à celle-ci et réalisée sous forme d'un angle droit, les premiers côtés d'angle droit de section interne (198) des sections internes (186) des deux parties de profilé d'arête (183, 184) pouvant respectivement s'appuyer de manière fixe contre une face de la pointe (20a) de l'élément latéral (2', 2') respectivement adjacent et, lorsque le profilé d'arête (181) est fermé, les seconds côtés d'angle droit de section interne (199) des sections internes (186) des deux parties de profilé d'arête (183, 184) se situant sur une droite ; les premiers côtés d'angle droit de section externe (188) des parties de profilé d'arête (183, 184) étant orientés, lorsque le profilé d'arête (181) est fermé, parallèlement l'un à l'autre à une certaine distance l'un de l'autre, chacune des parties de profilé d'arête (183, 184) présentant, dans sa section externe (185) respective, une découpe (200) s'étendant parallèlement au second côté d'angle droit de section externe (189) respectif dans le premier côté d'angle droit de section externe (188) respectif ; et le profilé d'arête (181) présentant une unité de liaison et/ou d'étanchéité (210, 220) introduite dans la distance que les côtés d'angle droit de section externe (188) possèdent l'un par rapport à l'autre, l'unité de liaison et/ou d'étanchéité (210 ; 220) présentant des nez de liaison (211 ; 212) faisant saillie des deux côtés et qui sont introduits dans les deux découpes (200), les parties de profilé d'arête (113, 123 ; 114, 124 ; 123`, 124' ; 183, 184) étant reliées par une articulation (17) au niveau des extrémités extérieures de leurs premiers côtés d'angle droit de section externe (118, 128, 188).

2. Profilé d'arête selon la revendication 1, **caractérisé en ce que** l'unité de liaison et/ou d'étanchéité (160 ; 210) est réalisée comme une bride rigide en forme de U, de V ou de double L, dont les pattes de liaison (161, 162 ; 213, 214) sont reliées directement ou par l'intermédiaire d'une âme de pontage fixe (163 ; 215) à une face externe de l'unité de liaison et/ou d'étanchéité (160 ; 210).

3. Profilé d'arête selon la revendication 1 ou 2, **caractérisé en ce que** l'unité de liaison et/ou d'étanchéité (220) est réalisée comme une bride en forme de double L, dont les pattes de liaison (213`, 214`) sont reliées par l'intermédiaire de l'articulation (17).

4. Profilé d'arête selon l'une des revendications précédentes, **caractérisé en ce que**, dans les sections externes (125", 125‴) des parties de profilé d'arête (123`, 124'), des chambres (18) ouvertes vers l'extérieur sont réalisées des deux côtés de l'articulation (17).

5. Profilé d'arête selon l'une des revendications précédentes, **caractérisé en ce que** les sections externes (115, 115` ; 125, 125' ; 185) des parties de profilé d'arête (113, 123 ; 114, 124 ; 123`, 124' ; 183, 184) sont réalisées en un matériau plein.

6. Profilé d'arête selon l'une des revendications précédentes, **caractérisé en ce que** le profilé d'arête (111, 121, 121', 121", 181, 191) est réalisé en au moins deux pièces de profilé d'arête (111a, 111b) agencées verticalement l'une au-dessus de l'autre.

7. Profilé d'arête selon l'une des revendications précédentes, **caractérisé en ce qu'**au moins deux sections internes (116, 116` ; 126, 126' ; 186, 186`) adjacentes forment ensemble une surface d'appui ou de montage plane.

8. Profilé d'arête selon l'une des revendications précédentes, **caractérisé en ce que** les coins des parties de profilé d'arête (113, 123 ; 114, 124 ; 123`, 124' ; 183, 184) sont aplatis ou arrondis.

9. Récipient (10) comportant au moins un profilé d'arête (111, 121, 121', 121", 181, 191) selon l'une des revendications précédentes, avec lequel sont reliés deux éléments latéraux (2, 2 ; 2`, 2`) en forme de plaque ou de vitre et sans cadre du récipient (10), lesquels présentent respectivement au moins un biseau (20) au niveau de leur extrémité orientée vers le profilé d'arête (111, 121, 121', 121", 181, 191), respectivement une face interne des éléments latéraux (2, 2) formant un angle aigu avec le biseau (20), ou présentent une pointe (20a), respectivement une face interne de l'élément latéral (2', 2`) respectif formant un angle obtus avec la face respectivement adjacente de la pointe (20a).
